# EUROPEAN PATENT APPLICATION

(11) **EP 4 838 769 A1**
(43) Date of publication of application: **11.11.2026**
(21) Application number: 25209214.3
(22) Date of filing: 16.10.2025
(51) Int. Cl.: H02M 1/00, H02M 3/00, H02M 3/335

(54) **POWER SUPPLY SYSTEM AND DRIVING METHOD FOR RESONANT CONVERTER**

(30) Priority: 09.05.2025 CN 202510594968
(71) Applicant: Delta Electronics, Inc., Taoyuan City 333 (TW)
(72) Inventor: CHEN, Li-Xin, 333 Taoyuan (TW); CHEN, Guan-Yu, 333 Taoyuan (TW); LI, Sheng-Hua, 333 Taoyuan (TW); LIN, You-Si, 333 Taoyuan (TW)
(74) Representative: Nederlandsch Octrooibureau

(57) **Abstract**

A power supply system includes a control circuit and a resonant converter including primary and secondary circuits, a resonant circuit and transformer. The secondary circuit includes first to fourth secondary side switches configured as a full-bridge topology or stacked half-bridge topology. In a zeroth mode, the first secondary side switch is in a conduction state to form a short circuit path in the secondary side circuit to store energy in a magnetic field of the resonant inductor. In a first mode, when the first and the fourth secondary side switches are in the conduction state, the resonant inductor releases the energy and discharges to the load side, and the fourth secondary side switch operates as a synchronous rectifier. In a second mode, the fourth secondary side switch is in the conduction state, and the resonant inductor resonates with the parasitic capacitance of the secondary side circuit.

## Description

### BACKGROUND

### Field of Invention

The present invention relates to a power supply system and driving method for resonant converter. More particularly, the present invention relates to a power supply system and driving method for resonant converter capable of achieving zero voltage switching.

### Description of Related Art

To achieve high efficiency in resonant converter technology, diodes included in secondary side circuits can be replaced by switches, thereby implementing synchronous rectification. However, after the synchronous rectification control, freewheeling energy in some topologies of secondary side circuits may be insufficient, leading to switching losses in the next operation mode.

Therefore, how to provide a power supply system to solve the above problems is the important issue in this field.

### SUMMARY

The present disclosure provides a power supply system. The power supply system includes a resonant converter and a control circuit. The resonant converter is configured to convert an input voltage into an output voltage. The transformer includes a primary side coil and a secondary side coil. The resonant circuit includes a resonant inductor and a resonant capacitor. The primary side circuit includes a plurality of primary side switches configured as a full-bridge topology. The primary side circuit is electrically connected to the primary side coil through the resonant inductor and the resonant capacitor. The secondary side circuit includes first to fourth secondary side switches configured as a full-bridge topology or a stacked half-bridge topology. The secondary side circuit is electrically connected to the secondary side coil. The control circuit is electrically connected to the resonant converter, and the control circuit is configured to operate the primary side circuit to perform the following steps. In zeroth to second modes, the input voltage is applied to the resonant circuit through a first set of the primary side switches. In third to fifth modes, the input voltage is applied to the resonant circuit through a second set of the primary side switches. The control circuit is further configured to operate the secondary side circuit, in order that the following steps are performed. In the first mode, the fourth secondary side switch is in a conduction state, and the second and the third secondary side switches are in an off state, so as to perform synchronous rectification, while the resonant inductor releases energy and discharges to load side. In the second mode, when the resonant inductor resonates with the parasitic capacitance of the secondary side circuit, the conduction state of the fourth secondary side switch can be continued from the previous mode (such as, the first mode) without effecting operation of circuit, so as to reduce switching losses in next mode (such as, the third mode), and the first to the third secondary side switches are in the off state. In the third mode, the fourth secondary side switch is in the conduction state, and the first and the third secondary side switches are in the off state, so as to form a short circuit path in the secondary side circuit, thereby increasing the energy stored in the resonant inductor.

The present disclosure provides a driving method for a resonant converter. The resonant converter includes first to fourth primary side switches configured as a full-bridge topology and first to fourth secondary side switches configured as a full-bridge topology or a stacked half-bridge topology. Control terminals of the first to the fourth primary side switches configured to respectively receive first to fourth primary side control signals. Control terminals of the first to the fourth secondary side switches configured to respectively receive first to fourth secondary side control signals. The driving method includes the following steps. At time t₀, the first and the fourth primary side control signals are changed from a low level to a high level, and the second and the third primary side control signals are changed from the high level to the low level. At time t₁, the third secondary side control signal is changed from the high level to the low level. At time t₁₁, the fourth secondary side control signal is changed from the low level to the high level. At time t₂, the first secondary side control signal is changed from the high level to the low level. At time t₃, the second and the third primary side control signals are changed from the low level to the high level, and the first and the fourth primary side control signals are changed from the high level to the low level. At time t₃₁, the second secondary side control signal is changed from the low level to the high level. At time t₄, the fourth secondary side control signal is changed from the high level to the low level, and wherein t₀< t₁< t₁₁< t₂ < t₃< t₃₁< t₄.

Summary, the power supply system and the operation method for the resonant converter of the present disclosure control the secondary side circuit to perform freewheeling operation after the synchronous rectification control, thereby reducing the switching losses in the secondary side circuit in the next operation.

### BRIEF DESCRIPTION OF THE DRAWINGS

The present disclosure can be more fully understood by reading the following detailed description of the embodiment, with reference made to the accompanying drawings as follows.
Fig. 1 depicts a schematic diagram of a resonant converter according to some embodiments of the present disclosure.
Fig. 2 depicts a schematic diagram of signal waveforms of a resonant converter according to some embodiments of the present disclosure.
Fig. 3A to Fig. 3F depict schematic diagrams of a resonant converter in zeroth to fifth modes according to some embodiments of the present disclosure.
Fig. 4 depicts a schematic diagram of a power supply system according to some embodiments of the present disclosure.
Fig. 5 depicts a schematic diagram of a logic circuit according to some embodiments of the present disclosure.
Fig. 6 depicts a schematic diagram of waveforms applied to the logic circuit according to some embodiments of the present disclosure.
Fig. 7 depicts a schematic diagram of the resonant converter in a mode according to some embodiments of the present disclosure.
Fig. 8 depicts a schematic diagram of the resonant converter in a mode according to some embodiments of the present disclosure.

### DETAILED DESCRIPTION

Reference will now be made in detail to embodiments of the present disclosure, examples of which are described herein and illustrated in the accompanying drawings. Wherever possible, the same reference numbers are used in the drawings and the description to refer to the same or like parts for better understanding.

In the description herein and throughout the claims that follow, the terms "comprise" or "comprising," "include" or "including," "have" or "having," "contain" or "containing" and the like used herein are to be understood to be open-ended, i.e., to mean including but not limited to.

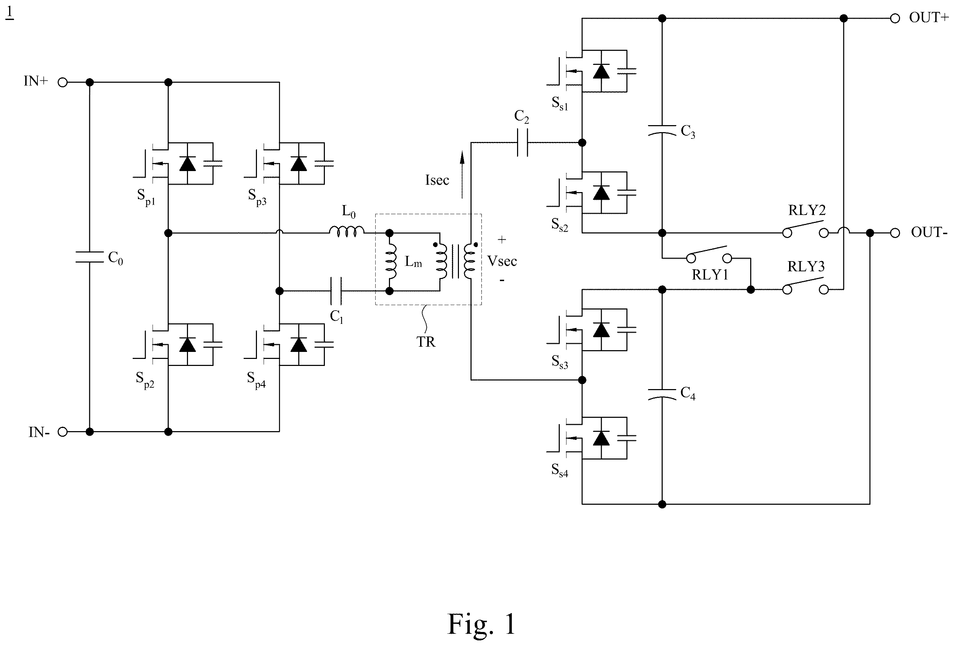

A description is provided with reference to Fig. 1. Fig. 1 depicts a schematic diagram of a resonant converter 1 according to some embodiments of the present disclosure. In some embodiments, the resonant converter 1 includes a primary side circuit, a resonant circuit (which can be considered as a resonant tank), a transformer TR and a secondary side circuit. In some embodiments, input terminals IN+ and IN- of the resonant converter 1 are configured to be connected to the DC voltage source to receive DC input voltage, and output terminals OUT+ and OUT- of the resonant converter 1 are configured to be connected to a load to supply a DC output voltage. The primary side circuit is connected to the primary side soil of the transformer TR through the resonant circuit, and the secondary side soil of the transformer TR is connected to the secondary side circuit. In some embodiments, the resonant converter 1 is a LLC resonant converter, and the resonant circuit includes a resonant inductor L₀, an equivalent magnetizing current Lₘ and a resonant capacitor C₁.

As shown in Fig. 1, the primary side circuit of the resonant converter 1 is full-bridge topology which includes primary side switches Sₚ₁~Sₚ₄ and a capacitor C₀. The secondary side circuit of the resonant converter 1 includes two half-bridge topologies, in which the first half-bridge circuit includes secondary side switches Sₛ₁~Sₛ₂ and a capacitor C₃, where the secondary side switch Sₛ₁ is an upper arm switch, and the secondary side switch Sₛ₂ is a lower arm switch. The second half-bridge circuit includes secondary side switches Sₛ₃~Sₛ₄ and a capacitor C₄, where the secondary side switch Sₛ₃ is an upper arm switch, and the secondary side switch Sₛ₄ is a lower arm switch. In some embodiments, the aforesaid two half-bridge topologies are connected in series or in parallel, thus the secondary side circuit of the resonant converter 1 can be configured as one of a stacked half-bridge topology (which is sometimes referred to as a serial half-bridge topology) and a full-bridge topology. Specifically, a first DC terminal of the first half-bridge circuit (such as, a first terminal of the capacitor C₃) is electrically connected to the output terminal OUT+, and a second DC terminal of the first half-bridge circuit (such as, a second terminal of the capacitor C₃) is electrically connected to the output terminal OUT- through a relay RLY2. A first DC terminal of the second half-bridge circuit (such as, a first terminal of the capacitor C₄) is electrically connected to the output terminal OUT+ through a relay RLY3, and a second DC terminal of the second half-bridge circuit (such as, a second terminal of the capacitor C₄) is electrically connected to output terminal OUT-. In some embodiments, the output terminal OUT+ can be considered as a first output terminal, and the output terminal OUT- can be considered as a second output terminal. Further, the second DC terminal of the first half-bridge circuit (such as, the second terminal of the capacitor C₃) is connected to the first DC terminal of the second half-bridge circuit (such as, the first terminal of the capacitor C₄) through the relay RLY1. Therefore, when the relay RLY1 is turned on and the relays RLY2 and RLY3 are turned off, the secondary side circuit is configured as a stacked half-bridge topology. When the relays RLY2 and RLY3 are turned on, and the relay RLY1 is turned off, the secondary side circuit is configured as a full-bridge topology. As a result, the secondary side circuit can be configured as a full-bridge topology or a stacked half-bridge topology to implement wide output voltage gain range. In some embodiments of the present disclosure, the secondary side circuit of the resonant converter 1 is illustrated as a stacked half-bridge topology for example.

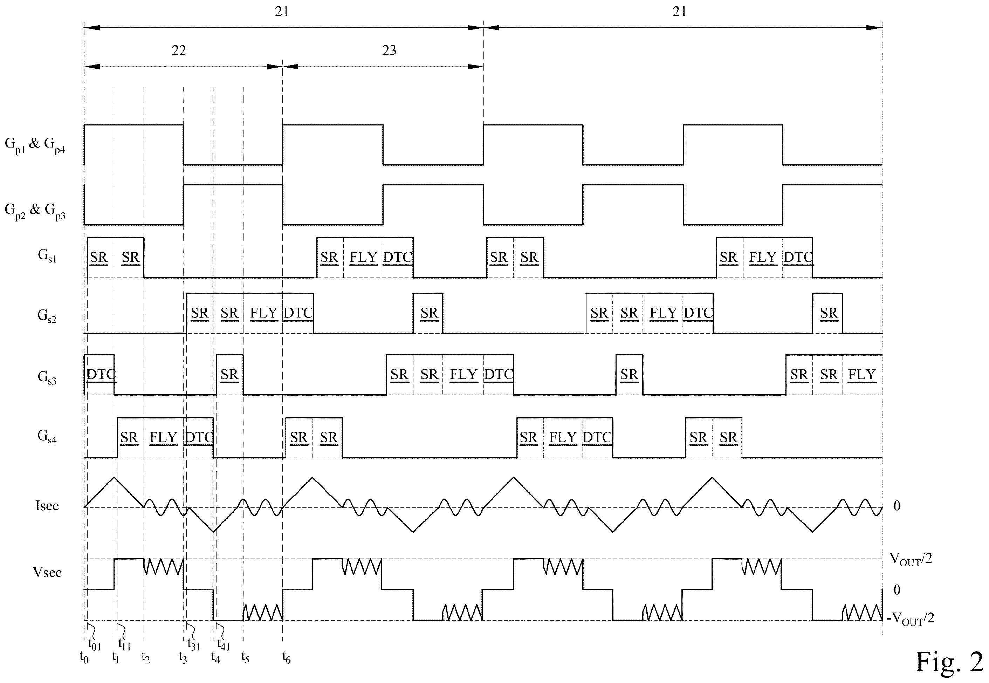

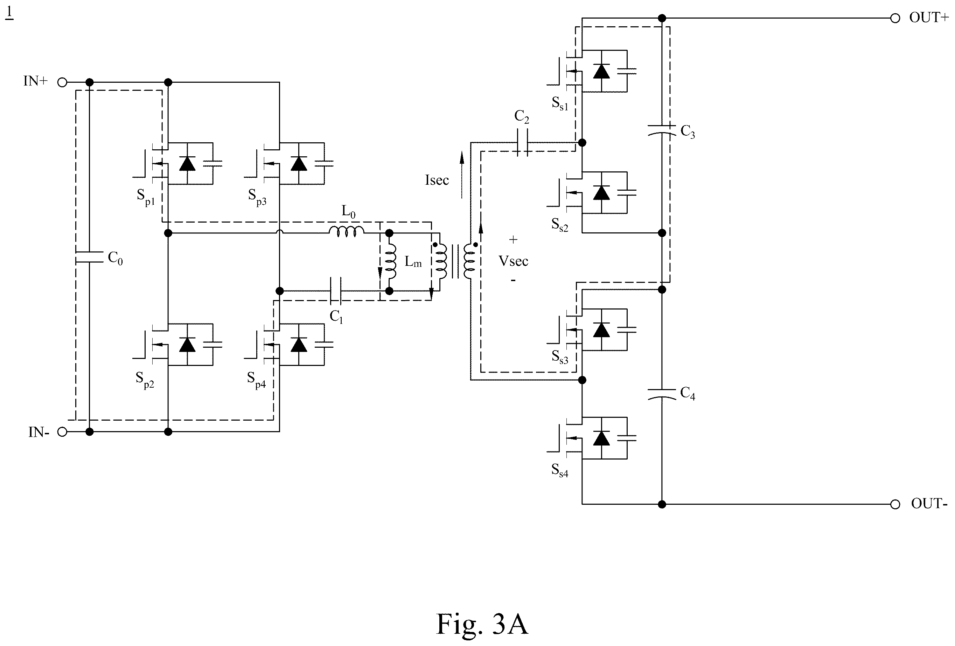

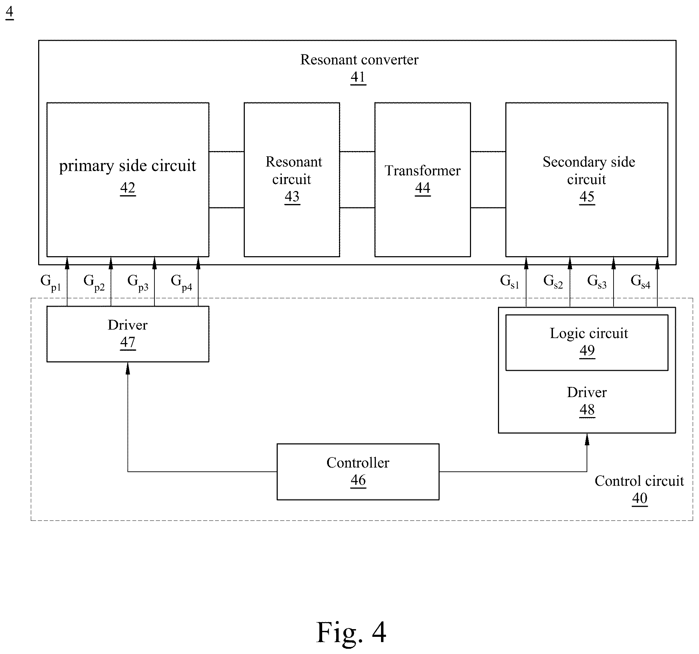

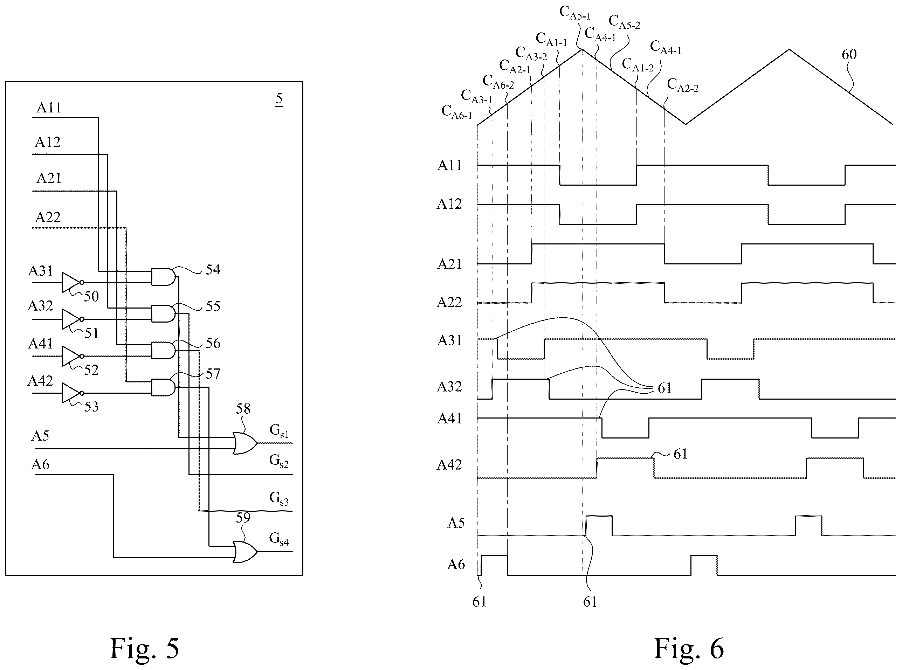

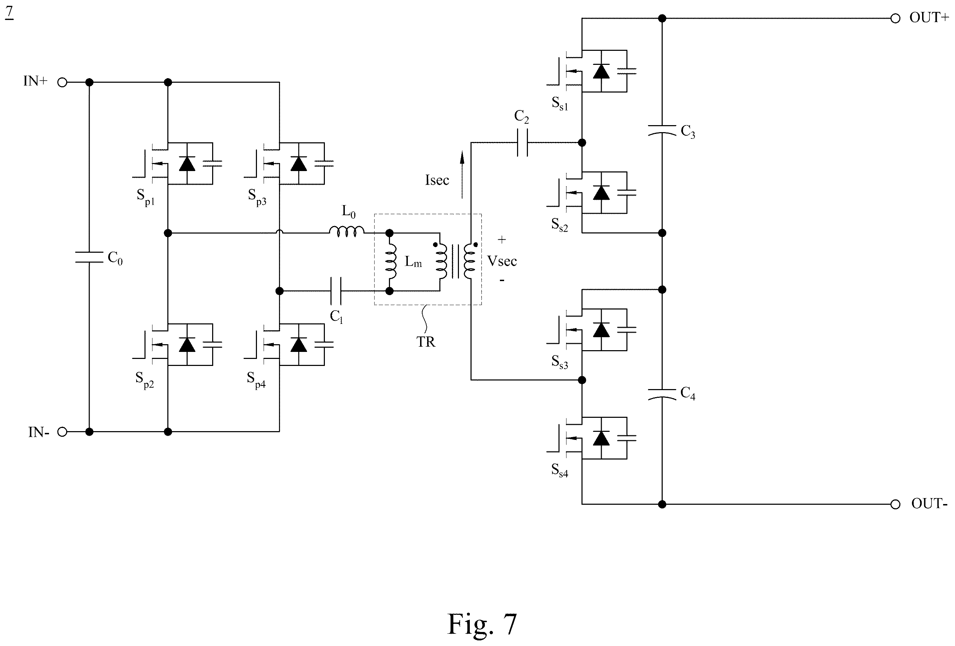

A description is provided with reference to Fig. 2 to Fig. 7. Fig. 2 depicts a schematic diagram of signal waveforms of a resonant converter 1 according to some embodiments of the present disclosure. Fig. 3A to Fig. 3F depict schematic diagrams of a resonant converter in zeroth to fifth modes according to some embodiments of the present disclosure. Fig. 4 depicts a schematic diagram of a power supply system 4 according to some embodiments of the present disclosure. Fig. 5 depicts a schematic diagram of a logic circuit 5 according to some embodiments of the present disclosure. Fig. 6 depicts a schematic diagram of waveforms applied to the logic circuit 5 according to some embodiments of the present disclosure. Fig. 7 depicts a schematic diagram of the resonant converter 7 in a mode according to some embodiments of the present disclosure. In the present disclosure, the control terminals (gate terminals) of the primary side switches Sₚ₁~Sₚ₄ are respectively configured to receive primary side control signals Gₚ₁~Gₚ₄. As shown in Fig. 2, one cycle 21 of the resonant converter 1 includes two periods 22 and 23.

As shown in Fig. 2, at time t₀, the primary side control signals Gₚ₁ and Gₚ₄ are changed from a low level to a high level, and the primary side control signals Gₚ₂ and Gₚ₃ are changed from the high level to the low level. At time t₀₁, the secondary side control signal Gₛ₁ is changed from the low level to the high level. The time interval t₀~t₀₁ is a turn-on delay of the secondary side switch Sₛ₁ to avoid switching losses caused by the parasitic capacitance.

At time t₁, the secondary side control signal Gₛ₃ is changed from the high level to the low level. At time t₁₁, the secondary side control signal Gₛ₄ is changed from the low level to the high level. The time interval t₁~t₁₁ is a turn-on delay of the secondary side switch Sₛ₄ to avoid energy consumption due to shoot-through.

At time t₂, the secondary side control signal Gₛ₁ is changed from the high level to the low level.

At time t₃, the primary side control signals Gₚ₁ and Gₚ₄ are changed from the high level to the low level, and the primary side control signals Gₚ₂ and Gₚ₃ are changed from the low level to the high level. At time t₃₁, the secondary side control signal Gₛ₂ is changed from the low level to the high level. The time interval t₃~t₃₁ is a turn-on delay to of the secondary side switch Sₛ₂ to avoid switching losses caused by the parasitic capacitance.

At time t₄, the secondary side control signal Gₛ₄ is changed from the high level to the low level. At time t₄₁, the secondary side control signal Gₛ₃ is changed from the low level to the high level. At time t₄~ t₄₁, time interval t₄~t₄₁ is a turn-on delay of the secondary side switch Sₛ₃ to avoid energy consumption due to shoot-through.

At time t₅, the secondary side control signal Gₛ₃ is changed from the high level to the low level.

At time t₆, the primary side control signals Gₚ₁ and Gₚ₄ are changed from the low level to the high level, and the primary side control signal Gₚ₂ and Gₚ₃ are changed from the high level to the low level.

As shown in Fig. 3A, in the zeroth mode (such as, the time interval t₀~t₁), the primary side switches Sₚ₁ and Sₚ₄ are in the conduction state according to the primary side control signals Gₚ₁ and Gₚ₄, in order to apply the input voltage to the resonant circuit through the primary side switches Sₚ₁ and Sₚ₄. In the zeroth mode, the secondary side switch Sₛ₃ is in the conduction state according to the secondary side control signal Gₛ₃, in order to form a short circuit path (closed path) in the secondary side circuit, thereby increasing the energy stored in the resonant inductor L₀, thus the delay-time control DTC is performed. Therefore, the energy released by resonant inductor L₀ increases in the next mode, thereby increasing voltage gain. At this time, the resonant current flowing through the resonant inductor L₀ and the secondary side current flowing through the secondary side coil of the transformer TR increase in the forward direction.

In the embodiments of Fig. 3A, if the secondary side switch Sₛ₃ in the zeroth mode is in the conduction state according to the secondary side control signal Gₛ₃, the aforesaid closed path is formed by the secondary side switch Sₛ₃, the secondary side coil, the capacitor C2, the secondary side switch Sₛ₁ and the capacitor C3. In some embodiments, a capacitance of the capacitor C2 corresponds to a capacitance of the capacitor C3, and thus the closed path can be considered as forming by the secondary side switch Sₛ₃, the secondary side coil and the secondary side switch Sₛ₁. In the other embodiments, if the secondary side switch Sₛ₃ in the zeroth mode is in the off state, the aforesaid closed path is formed by the secondary side switch Sₛ₃, the secondary side coil and a body diode of the secondary side switch Sₛ₁.

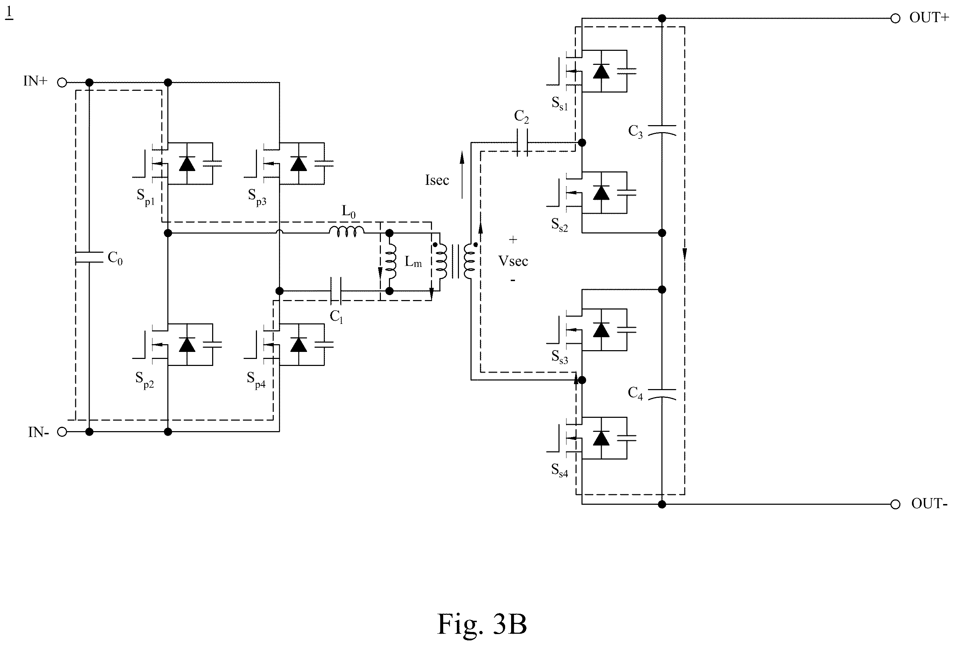

As show in Fig. 3B, in the first mode (such as, the time interval t₁~t₂), the resonant inductor L₀ releases the previous stored energy, and the secondary side switch Sₛ₄ is turned on according to the secondary side control signal Gₛ₄, thereby performing synchronous rectification SR. At this time, the resonant current flowing through the resonant inductor L₀ and the secondary side current flowing through the secondary side coil of the transformer TR decreases in the forward direction.

In the embodiments of Fig. 3B, if the secondary side switch Sₛ₁ in the first mode is in the conduction state according to the secondary side control signal Gₛ₁, the secondary side current flows from the output terminal OUT- through the secondary side switch Sₛ₄, the secondary side coil, the capacitor C₂, the secondary side switch Sₛ₁ to the output terminal OUT+, thereby decreasing the conduction loss due to the voltage drop of the diode. In the other embodiments, if the secondary side switch Sₛ₁ in the zeroth is in the off state, the secondary side current flows from the output terminal OUT- through the secondary side switch Sₛ₄, the secondary side coil, the capacitor C₂, a body diode of the secondary side switch Sₛ₁ to the output terminal OUT+.

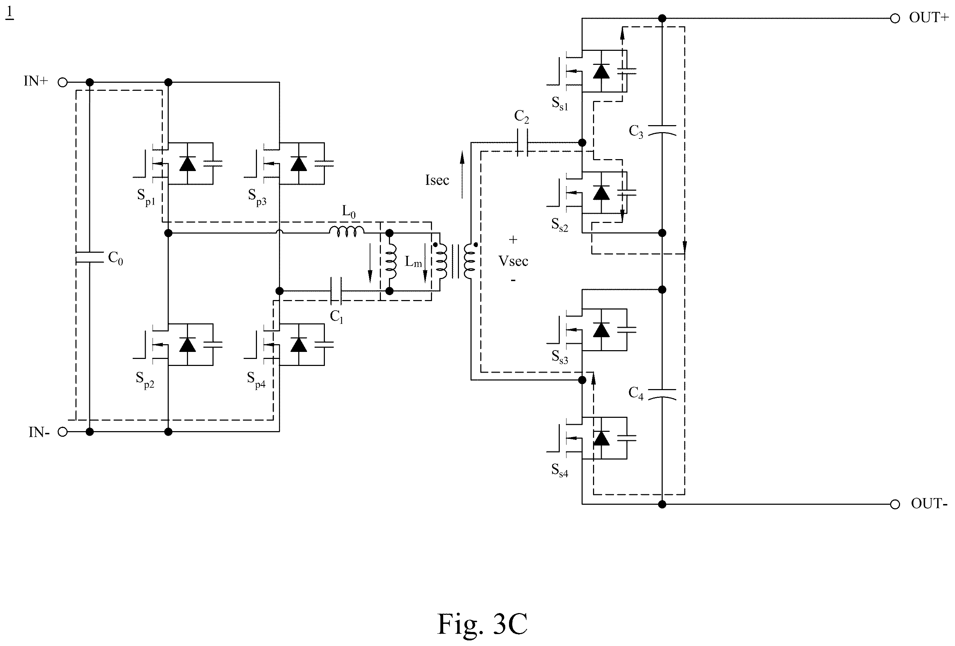

As shown in Fig. 3C, in the second mode (such as, the time interval t₂~t₃), the resonant inductor L₀ finishes releasing the energy. Meanwhile, the secondary side current Isec and a difference between the resonant current and the magnetizing current Lₘ oscillate slightly around 0. However, the slight oscillation of the secondary side current Isec resonates with the parasitic capacitance in the secondary side circuit. Meanwhile, insufficient freewheeling energy in the circuit may lead to switching losses in the next mode. Therefore, in the second mode, the secondary side switch Sₛ₄ remains in the conduction state, in order to perform freewheeling operation FLY, thereby improving the switching losses in the next mode when the secondary side switch Sₛ₄ is turned on.

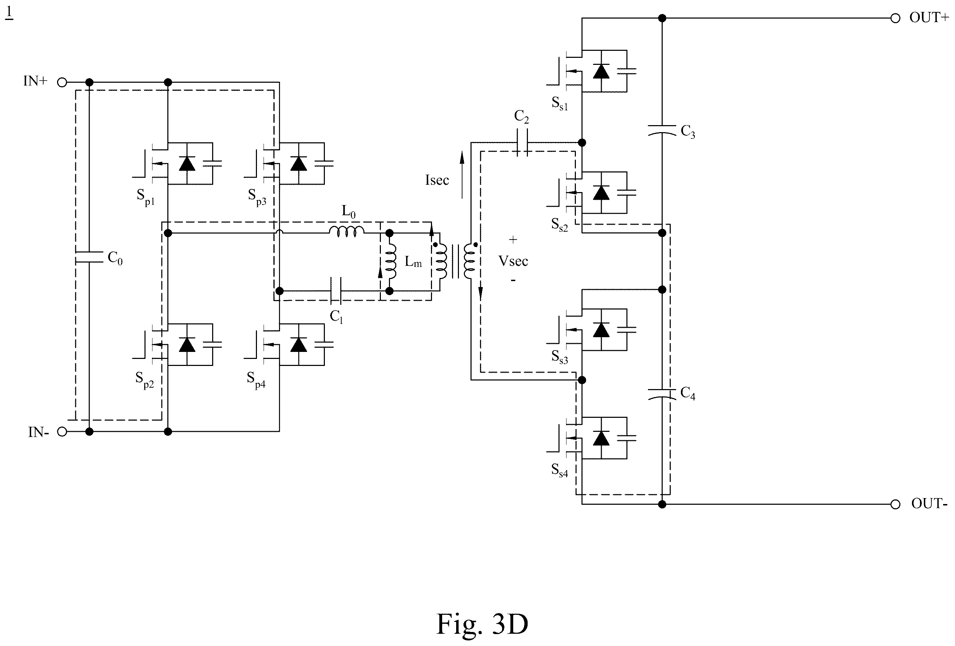

As shown in Fig. 3D, in the third mode (such as, the time interval t₃~t₄), the primary side switches Sₚ₂ and Sₚ₃ are in the conduction state according to the primary side control signals Gₚ₂ and Gₚ₃, and the input voltage is applied to the resonant circuit through the primary side switches Sₚ₂ and Sₚ₃. In the third mode, the secondary side switch Sₛ₄ is in the conduction state according to the secondary side control signal Gₛ₄, and a short circuit path (closed path) is formed in the secondary side circuit, in order to increase the energy stored in the resonant inductor L₀, and thus the delay-time control DTC is performed. As a result, the energy released by the resonant inductor L₀ increases in the next mode, thereby increasing voltage gain. At this time, the resonant current flowing through the resonant inductor L₀ and the secondary side current flowing through the secondary side coil of the transformer TR increase in the backward direction.

In the embodiments of Fig. 3D, if the secondary side switch Sₛ₂ in the third mode is in the conduction state according to the secondary side control signal Gₛ₂, the aforesaid closed path is formed by the secondary side switch Sₛ₄, the secondary side coil, the capacitor C2, the secondary side switch Sₛ₂ and the capacitor C4. In some embodiments, the capacitance of the capacitor C2 corresponds to the capacitance of the capacitor C4, and thus the closed path can be considered as forming by the secondary side switch Sₛ₄, the secondary side coil and the secondary side switch Sₛ₂. In the other embodiments, if the secondary side switch Sₛ₂ in the third mode is in the off state, the aforesaid closed path is formed by the secondary side switch Sₛ₄, the secondary side coil and a body diode of the secondary side switch Sₛ₂.

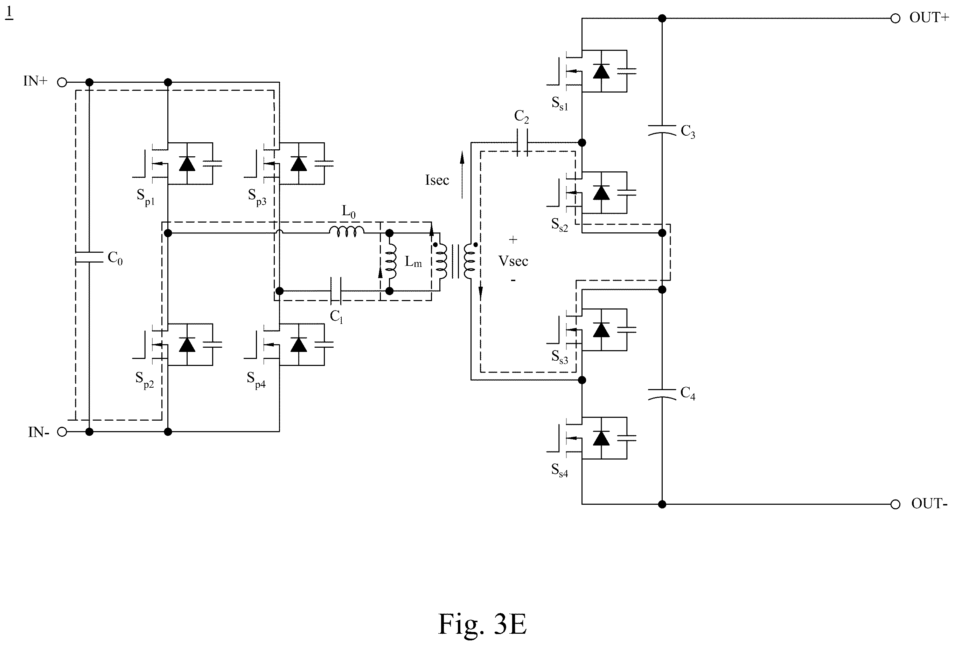

As shown in Fig. 3E, in the fourth mode (such as, the time interval t₄~t₅), the resonant inductor L₀ releases the previous stored energy, and the secondary side switch Sₛ₂ is turned on according to the secondary side control signal Gₛ₂, in order to perform the synchronous rectification SR. Meanwhile, the resonant current flowing through the resonant inductor L₀ and the secondary side current flowing though the secondary side coil of the transformer TR decreases in the backward direction.

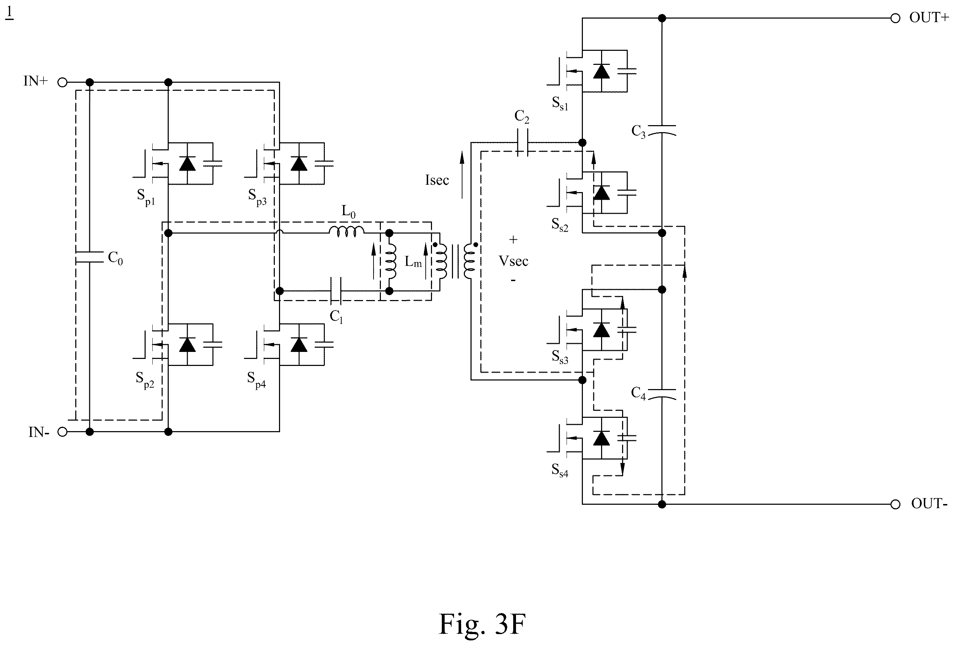

As shown in Fig. 3F, in the fifth mode (such as, the time interval t₅~t₆), the resonant inductor L₀ finishes releasing the energy. Meanwhile, the secondary side current Isec and a difference between the resonant current and the magnetizing current Lₘ oscillate slightly around 0. However, the slight oscillation of the secondary side current Isec resonates with the parasitic capacitance in the secondary side circuit. Meanwhile, the insufficient freewheeling energy in the circuit may lead to switching losses in the next mode. Therefore, in the fifth mode, the secondary side switch Sₛ₂ remains in the conduction state, in order to perform freewheeling operation FLY, thereby improving the switching losses in the next mode when the secondary side switch Sₛ₄ is turned on.

In some embodiments, the resonant converter of the present disclosure is a three-level LLC converter. To be noted that, in the embodiments of Fig. 7, Fig. 2 and Fig. 3A to Fig. 3F, the secondary side circuit is configured as a stacked half-bridge topology, which has a voltage doubler structure, and thus three levels of the voltage across the secondary side coil are +Vₒᵤₜ/2, 0 and -Vₒᵤₜ/2 volts, where the Vₒᵤₜ refers to the output voltage.

A description is provided with reference to Fig. 4. As shown in Fig. 4, the power supply system 4 includes a resonant converter 41 and a control circuit 40. The resonant converter 41 includes a primary side circuit 42, a resonant circuit 43, a transformer 44 and a secondary side circuit 45. In some embodiments, the primary side circuit 42, the resonant circuit 43, the transformer 44 and the secondary side circuit 45 of the resonant converter 41 in Fig. 4 respectively correspond to the primary side circuit, the resonant circuit, the transformer and the secondary side circuit of the resonant converter 1 in Fig. 1, and thus the description is omitted here.

The control circuit 40 includes a controller 46, drivers 47 and 48. The driver 47 is configured to generate and provide primary side control signals Gₚ₁~Gₚ₄ to the primary side switches included in the primary side circuit 42. The driver 48 includes a logic circuit 49. The driver 48 is configured to generate and provide the secondary side control signals Gₛ₁~Gₛ₄ to the secondary side switches included in the secondary side circuit 45. In some embodiments, the primary side control signals Gₚ₁~Gₚ₄ and the secondary side control signals Gₛ₁~Gₛ₄ in Fig. 4 are respectively correspond to the primary side control signals Gₚ₁~Gₚ₄ and the secondary side control signals Gₛ₁~Gₛ₄ in Fig. 2, and thus the description is omitted here.

A description is provided with reference to Fig. 5 and Fig. 6. The logic circuit 5 in Fig. 5 corresponds to the logic circuit 49 in Fig. 4.

As shown in Fig. 5, the logic circuit 49 includes inverters 50~53, AND gates 54~57, OR gates 58~59. Signals A11~A22 are respectively input to first input terminals of the AND gates 54~57, and signals which are the inverse of signals A31~A32 and A41~A42 are respectively input to second input terminals of the AND gates 54~57, in order to generate first to fourth signals, where the second and the third signals are respectively the secondary side control signal Gₛ₂~Gₛ₃. The first and the fourth signals are respectively input to first input terminal of the OR gates 58 and 59, and signals A5~A6 are respectively input to second terminals of the OR gates 58 and 59, in order to generate secondary side control signal Gₛ₁ and Gₛ₄.

As shown in Fig. 6, signals A11~A12, A21~A22, A31~A32, A41~A42, A5 and A6 can be generated by comparing the signal 60 and reference values (such as, reference values CA₁₋₁, CA₁₋₂, CA₂₋₁, CA₂₋₂, CA₃₋₁, CA₃₋₂ , CA₄₋₁, CA₄₋₂, CA₅₋₁, CA₅₋₂, CA₆₋₁ and CA₆₋₂). In some embodiments, the said comparison operation can be implemented by multiple comparators and related components (such as, the shared pull-up resistor), in order to generate signals A11~A12, A21~A22, A31~A32, A41~A42, A5 and A6. In some embodiments, the signal 60 is a high-frequency switching carrier signal.

In some embodiments, the signals A31 and A32 includes the waveforms which correspond to the delay-time control operation associated with the secondary side control signals Gₛ₁ and Gₛ₂. The signals A41 and A42 includes the waveforms which correspond to the delay-time control operation associated with the secondary side control signals Gₛ₃ and Gₛ₄.

In some embodiments, the signal which is the inverse of signal A31 is used as a mask to allow the waveform in the secondary side control signal Gₛ₁, which corresponds to the delay-time control operation, to pass. The signal which is the inverse of signal A32 is used as a mask to allow the waveform in the secondary side control signal Gₛ₂, which corresponds to the delay-time control operation, to pass. The signal which is the inverse of signal A41 is used as a mask to allow the waveform in the secondary side control signal Gₛ₃, which corresponds to the delay-time control operation, to pass. The signal which is the inverse of signal A42 is used as a mask to allow the waveform in the secondary side control signal Gₛ₄, which corresponds to the delay-time control operation, to pass.

In some embodiments, the signal A5 corresponds to certain waveforms in the secondary side control signal Gₛ₁, which are associated with the synchronous rectification. The signal A6 corresponds to certain waveforms in the secondary side control signal Gₛ₄, which are associated with the synchronous rectification.

In some embodiments, the interval 61 is set to avoid the switching losses caused by the parasitic capacitance, which correspond to the delay on time of the switches (such as, the interval t₀~t₀₁ and the interval t₁~t₁₁).

A description is provided with reference to Fig. 7. As shown in Fig. 7, the resonant converter 7 includes a primary side circuit, a resonant circuit, a transformer TR and a secondary side circuit. In the embodiments of Fig. 7, the secondary side circuit of the resonant converter 7 is configured as the stacked half-bridge topology (which refers to two half-bridge topologies connected in series between the output terminals OUT+ and OUT-).

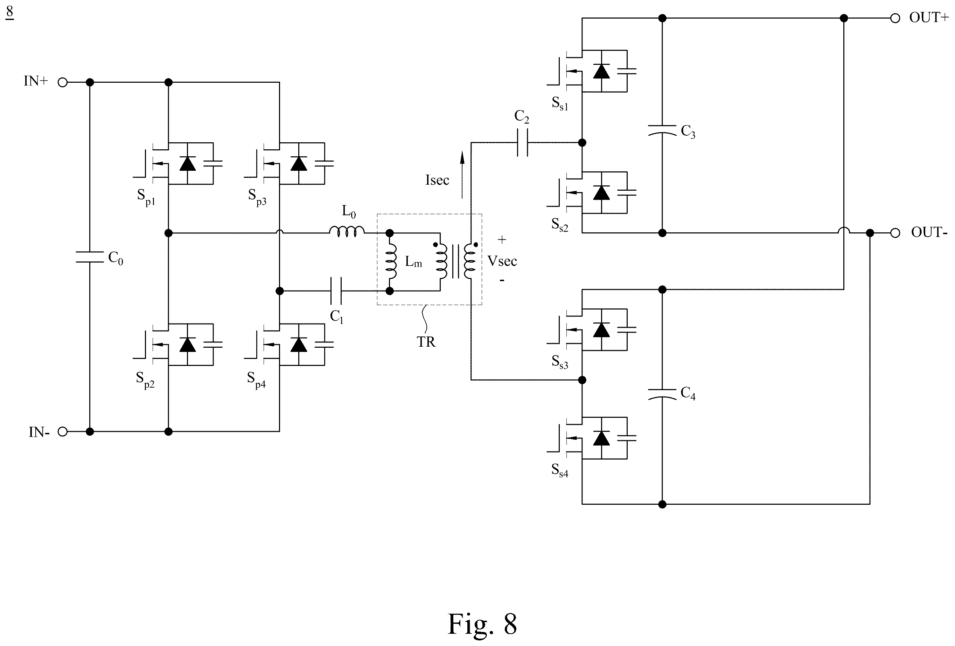

A description is provided with reference to Fig. 8. Fig. 8 depicts a schematic diagram of the resonant converter 8 in a mode according to some embodiments of the present disclosure. As shown in Fig. 8, the resonant converter 8 includes a primary side circuit, a resonant circuit, a transformer TR and the secondary side circuit. In the embodiments of Fig. 8, the secondary side circuit of the resonant converter 8 is configured as a full-bridge topology (which refers to two half-bridge topologies connected in parallel between the output terminals OUT+ and OUT-). The operations for the resonant converter 8 in Fig. 8 are similar to the operations for the resonant converter 7 in Fig. 7, and thus the description is omitted here.

Summary, the power supply system 4 and the operation method for the resonant converter 1 in the present disclosure control the secondary side circuit 45 to perform the synchronous rectification after the freewheeling operation in the secondary side circuit 45, thereby reducing the switching losses in the secondary side circuit 45 in the next operation.

## Claims

1. A power supply system (4), **characterized in that** it comprising:
a resonant converter (1; 41), configured to convert an input voltage into an output voltage, comprising:
a transformer (44), comprising a primary side coil and a secondary side coil;
a resonant circuit (43), comprising a resonant inductor (L₀) and a resonant capacitor (C₁);
a primary side circuit (42), comprising a plurality of primary side switches (Sₚ₁, Sₚ₂, Sₚ₃, Sₚ₄) configured as a full-bridge topology, electrically connected through the resonant inductor and the resonant capacitor to the primary side coil; and
a secondary side circuit (45), comprising first to fourth secondary side switches (Sₛ₁, Sₛ₂, Sₛ₃, Sₛ₄) configured as a full-bridge topology or a stacked half-bridge topology, electrically connected to the secondary side coil; and
a control circuit (40), electrically connected to the resonant converter, configured to operate the primary side circuit to:
in zeroth to second modes, apply the input voltage to the resonant circuit through a first set of the primary side switches; and
in third to fifth modes, apply the input voltage to the resonant circuit through a second set of the primary side switches,
and wherein the control circuit is further configured to operate the secondary side circuit, in order that:
in the first mode, the fourth secondary side switch is in a conduction state, and the second and the third secondary side switches are in an off state, so as to perform synchronous rectification, while the resonant inductor releases energy and discharges to load side;
in the second mode, when the resonant inductor resonates with parasitic capacitance of the secondary side circuit, the conduction state of the fourth secondary side switch can be continued from previous mode without effecting operation of circuit, so as to reduce switching losses in next mode, and the first to the third secondary side switches are in the off state; and
in the third mode, the fourth secondary side switch is in the conduction state, and the first and the third secondary side switches are in the off state, so as to form a short circuit path in the secondary side circuit, thereby increasing energy stored in the resonant inductor.

2. The power supply system as claimed in claim 1, wherein in the first mode, the fourth secondary side switch is in the conduction state, so that a primary side current flows from a first output terminal through the fourth secondary side switch, the secondary side coil and the first secondary side switch to a second output terminal.

3. The power supply system as claimed in either claim 1 or claim 2, wherein in the first mode, the second and the third secondary side switches are in the off state, so that a primary side current flows from a first output terminal through the fourth secondary side switch, the secondary side coil and a body diode of the first secondary side switch to a second output terminal.

4. The power supply system as claimed in any one of claims 1 to 3, wherein in the third mode, the fourth secondary side switch is in the conduction state, so that the fourth secondary side switch, the secondary side coil and the second secondary side switch form a closed circuit.

5. The power supply system as claimed in any one of claims 1 to 4, wherein in the third mode, the first and the third secondary side switches are in the off state, so that the fourth secondary side switch, the secondary side coil and a body diode of the second secondary side switch form a closed circuit.

6. The power supply system as claimed in any one of claims 1 to 5, wherein a direction of a resonant current flowing through the resonant inductor in the first mode is opposite to a direction of the resonant current flowing through the resonant inductor in the third mode.

7. The power supply system as claimed in any one of claims 1 to 6, wherein the resonant current decreases in forward direction in the first mode, and wherein the resonant current increases in backward direction in the third mode.

8. The power supply system as claimed in any one of claims 1 to 7, wherein the resonant circuit further comprises an equivalent magnetizing inductance connected in parallel with the primary side coil, and wherein in the second mode, a difference between a resonant current flowing through the resonant inductor and a magnetizing current (Lₘ) of the transformer oscillates slightly around 0.

9. The power supply system as claimed in any one of claims 1 to 8, wherein the secondary side circuit comprises a first half-bridge circuit and a second half-bridge circuit, wherein the first half-bridge circuit comprises the first secondary side switch, the second secondary side switch and a third capacitor (C₃), wherein the second half-bridge circuit comprises the third secondary side switch, the fourth secondary side switch and a fourth capacitor (C₄), wherein the full-bridge topology refers to the first half-bridge circuit connected in parallel with the second half-bridge circuit, and wherein the stacked half-bridge topology refers to the first half-bridge circuit connected in series with the second half-bridge circuit.

10. The power supply system as claimed in any one of claims 1 to 9, wherein in the second mode, the resonant inductor finishes releasing the energy, and the fourth secondary side switch is in the conduction state to provide a path for dissipating energy stored in the secondary side coil, thereby reducing switching losses of the resonant converter in the third mode.

11. A driving method for a resonant converter (1; 41), **characterized in that** the resonant converter comprises first to fourth primary side switches (Sₚ₁, Sₚ₂, Sₚ₃, Sₚ₄) configured as a full-bridge topology and first to fourth secondary side switches (Sₛ₁, Sₛ₂, Sₛ₃, Sₛ₄) configured as a full-bridge topology or a stacked half-bridge topology, wherein control terminals of the first to the fourth primary side switches configured to respectively receive first to fourth primary side control signals (Gₚ₁, Gₚ₂, Gₚ₃, Gₚ₄), wherein control terminals of the first to the fourth secondary side switches configured to respectively receive first to fourth secondary side control signals (Gₛ₁, Gₛ₂, Gₛ₃, Gₛ₄), and wherein the driving method comprises:
at time t₀, changing the first and the fourth primary side control signals from a low level to a high level, and changing the second and the third primary side control signals from the high level to the low level;
at time t₁, changing the third secondary side control signal from the high level to the low level;
at time t₁₁, changing the fourth secondary side control signal from the low level to the high level;
at time t₂, changing the first secondary side control signal from the high level to the low level;
at time t₃, changing the second and the third primary side control signals from the low level to the high level, and changing the first and the fourth primary side control signals from the high level to the low level;
at time t₃₁, changing the second secondary side control signal from the low level to the high level; and
at time t₄, changing the fourth secondary side control signal from the high level to the low level, and wherein t₀< t₁< t₁₁< t₂ < t₃< t₃₁< t₄.

12. The driving method as claimed in claim 11, wherein a time interval t₁~ t₁₁ is a turn-on delay of the fourth secondary side switch, and wherein the time interval t₁~ t₁₁ is to avoid energy consumption due to shoot-through.

13. The driving method as claimed in either claim 11 or claim 12, wherein a time interval t₃~ t₃₁ is a turn-on delay of the second secondary side switch, and wherein the time interval t₃~ t₃₁ is to avoid switching losses caused by parasitic capacitance.

14. The driving method as claimed in any one of claims 11 to 13, wherein the resonant converter comprises a secondary side circuit (45), wherein the secondary side circuit comprises a first half-bridge circuit and a second half-bridge circuit, wherein the first half-bridge circuit comprises the first secondary side switch, the second secondary side switch and a third capacitor (C₃), wherein the second half-bridge circuit comprises the third secondary side switch, the fourth secondary side switch and a fourth capacitor (C₄).

15. The driving method as claimed in any one of claims 11 to 14, wherein the full-bridge topology refers to the first half-bridge circuit connected in parallel with the second half-bridge circuit, and wherein the stacked half-bridge topology refers to the first half-bridge circuit connected in series with the second half-bridge circuit.

## Amended claims

### Amended claims in accordance with Rule 137(2) EPC.

1. A power supply system (4), comprising:
a resonant converter (1; 41), configured to convert an input voltage into an output voltage, comprising:
a transformer (44), comprising a primary side coil and a secondary side coil;
a resonant circuit (43), comprising a resonant inductor (L₀) and a resonant capacitor (C₁);
a primary side circuit (42), comprising first to fourth primary side switches (Sₚ₁, Sₚ₂, Sₚ₃, Sₚ₄) configured as a full-bridge topology, electrically connected through the resonant inductor and the resonant capacitor to the primary side coil, wherein control terminals of the first to the fourth primary side switches configured to respectively receive first to fourth primary side control signals (Gₚ₁, Gₚ₂, Gₚ₃, Gₚ₄); and
a secondary side circuit (45), comprising first to fourth secondary side switches (Sₛ₁, Sₛ₂, Sₛ₃, Sₛ₄) configured as a full-bridge topology or a stacked half-bridge topology, electrically connected to the secondary side coil, wherein control terminals of the first to the fourth secondary side switches configured to respectively receive first to fourth secondary side control signals (Gₛ₁, Gₛ₂, Gₛ₃, Gₛ₄); and
a control circuit (40), electrically connected to the resonant converter, configured to operate the primary side circuit to:
in zeroth to second modes, apply the input voltage to the resonant circuit through a first set of the primary side switches; and
in third to fifth modes, apply the input voltage to the resonant circuit through a second set of the primary side switches,
and wherein the control circuit is further configured to operate the secondary side circuit, in order that:
in the first mode, the fourth secondary side switch is in a conduction state, and the second and the third secondary side switches are in an off state, so as to perform synchronous rectification, while the resonant inductor releases energy and discharges to load side;
in the second mode, when the resonant inductor resonates with parasitic capacitance of the secondary side circuit, the conduction state of the fourth secondary side switch can be continued from previous mode without effecting operation of circuit, so as to reduce switching losses in next mode, and the first to the third secondary side switches are in the off state; and
**characterized in that** the power supply system further comprising:
in the third mode, the fourth secondary side switch is in the conduction state, and the first and the third secondary side switches are in the off state, so as to form a short circuit path in the secondary side circuit, thereby increasing energy stored in the resonant inductor;
wherein at time t₀, the first and the fourth primary side control signals are changed from a low level to a high level, and the second and the third primary side control signals are changed from the high level to the low level;
wherein at time t₁, the third secondary side control signal is changed from the high level to the low level;
wherein at time t₁₁, the fourth secondary side control signal is changed from the low level to the high level;
wherein at time t₂, the first secondary side control signal is changed from the high level to the low level;
wherein at time t₃, the second and the third primary side control signals are changed from the low level to the high level, and the first and the fourth primary side control signals are changed from the high level to the low level;
wherein at time t₃₁, the second secondary side control signal is changed from the low level to the high level;
wherein at time t₄, the fourth secondary side control signal is changed from the high level to the low level, and wherein t₀< t₁< t₁₁< t₂ < t₃< t₃₁< t₄.

2. The power supply system as claimed in claim 1, wherein in the first mode, the fourth secondary side switch is in the conduction state, so that a primary side current flows from a first output terminal through the fourth secondary side switch, the secondary side coil and the first secondary side switch to a second output terminal.

3. The power supply system as claimed in either claim 1 or claim 2, wherein in the first mode, the second and the third secondary side switches are in the off state, so that a primary side current flows from a first output terminal through the fourth secondary side switch, the secondary side coil and a body diode of the first secondary side switch to a second output terminal.

4. The power supply system as claimed in any one of claims 1 to 3, wherein in the third mode, the fourth secondary side switch is in the conduction state, so that the fourth secondary side switch, the secondary side coil and the second secondary side switch form a closed circuit.

5. The power supply system as claimed in any one of claims 1 to 4, wherein in the third mode, the first and the third secondary side switches are in the off state, so that the fourth secondary side switch, the secondary side coil and a body diode of the second secondary side switch form a closed circuit.

6. The power supply system as claimed in any one of claims 1 to 5, wherein a direction of a resonant current flowing through the resonant inductor in the first mode is opposite to a direction of the resonant current flowing through the resonant inductor in the third mode.

7. The power supply system as claimed in any one of claims 1 to 6, wherein the resonant current decreases in forward direction in the first mode, and wherein the resonant current increases in backward direction in the third mode.

8. The power supply system as claimed in any one of claims 1 to 7, wherein the resonant circuit further comprises an equivalent magnetizing inductance connected in parallel with the primary side coil, and wherein in the second mode, a difference between a resonant current flowing through the resonant inductor and a magnetizing current (Lₘ) of the transformer oscillates slightly around 0.

9. The power supply system as claimed in any one of claims 1 to 8, wherein the secondary side circuit comprises a first half-bridge circuit and a second half-bridge circuit, wherein the first half-bridge circuit comprises the first secondary side switch, the second secondary side switch and a third capacitor (C₃), wherein the second half-bridge circuit comprises the third secondary side switch, the fourth secondary side switch and a fourth capacitor (C₄), wherein the full-bridge topology refers to the first half-bridge circuit connected in parallel with the second half-bridge circuit, and wherein the stacked half-bridge topology refers to the first half-bridge circuit connected in series with the second half-bridge circuit.

10. The power supply system as claimed in any one of claims 1 to 9, wherein in the second mode, the resonant inductor finishes releasing the energy, and the fourth secondary side switch is in the conduction state to provide a path for dissipating energy stored in the secondary side coil, thereby reducing switching losses of the resonant converter in the third mode.

11. A driving method for a resonant converter (1; 41), wherein the resonant converter comprises first to fourth primary side switches (Sₚ₁, Sₚ₂, Sₚ₃, Sₚ₄) configured as a full-bridge topology and first to fourth secondary side switches (Sₛ₁, Sₛ₂, Sₛ₃, Sₛ₄) configured as a full-bridge topology or a stacked half-bridge topology, wherein control terminals of the first to the fourth primary side switches configured to respectively receive first to fourth primary side control signals (Gₚ₁, Gₚ₂, Gₚ₃, Gₚ₄), wherein control terminals of the first to the fourth secondary side switches configured to respectively receive first to fourth secondary side control signals (Gₛ₁, Gₛ₂, Gₛ₃, Gₛ₄), and wherein the driving method comprises:
at time t₀, changing the first and the fourth primary side control signals from a low level to a high level, and changing the second and the third primary side control signals from the high level to the low level;
at time t₂, changing the first secondary side control signal from the high level to the low level;
at time t₃, changing the second and the third primary side control signals from the low level to the high level, and changing the first and the fourth primary side control signals from the high level to the low level;
at time t₃₁, changing the second secondary side control signal from the low level to the high level; and
**characterized in that** the driving method further comprising:
at time t₁, changing the third secondary side control signal from the high level to the low level;
at time t₁₁, changing the fourth secondary side control signal from the low level to the high level;
at time t₄, changing the fourth secondary side control signal from the high level to the low level, and wherein t₀< t₁< t₁₁< t₂ < t₃< t₃₁< t₄.

12. The driving method as claimed in claim 11, wherein a time interval t₁~ t₁₁ is a turn-on delay of the fourth secondary side switch, and wherein the time interval t₁~ t₁₁ is to avoid energy consumption due to shoot-through.

13. The driving method as claimed in either claim 11 or claim 12, wherein a time interval t₃~ t₃₁ is a turn-on delay of the second secondary side switch, and wherein the time interval t₃~ t₃₁ is to avoid switching losses caused by parasitic capacitance.

14. The driving method as claimed in any one of claims 11 to 13, wherein the resonant converter comprises a secondary side circuit (45), wherein the secondary side circuit comprises a first half-bridge circuit and a second half-bridge circuit, wherein the first half-bridge circuit comprises the first secondary side switch, the second secondary side switch and a third capacitor (C₃), wherein the second half-bridge circuit comprises the third secondary side switch, the fourth secondary side switch and a fourth capacitor (C₄).

15. The driving method as claimed in any one of claims 11 to 14, wherein the full-bridge topology refers to the first half-bridge circuit connected in parallel with the second half-bridge circuit, and wherein the stacked half-bridge topology refers to the first half-bridge circuit connected in series with the second half-bridge circuit.
